Europäisches Patentamt

**European Patent Office**

Office européen des brevets

(19)

(11) Numéro de publication: **0 048 640**
**B1**

(12) FASCICULE DE BREVET EUROPEEN

(45) Date de publication du fascicule du brevet:
11.01.84

(51) Int. Cl.³: **H 04 B 9/00,** H 04 J 15/00,
G 02 B 7/26

(21) Numéro de dépôt: **81401307.4**

(22) Date de dépôt: **14.08.81**

(54) Dispositif de séparation de deux signaux lumineux émis par des sources de longueurs d'onde différentes, et transmis sur une même fibre optique, et récepteur comportant un tel dispositif.

(30) Priorité: **12.09.80 FR 8019743**

(43) Date de publication de la demande:
**31.03.82 Bulletin 82/13**

(45) Mention de la délivrance du brevet:
**11.01.84 Bulletin 84/2**

(84) Etats contractants désignés:
**DE GB NL**

(56) Documents cités:
**EP - A - 0 009 534**

**JOURNAL OF APPLIED PHYSICS, vol. 51, no. 8, août 1980 New York, US SHEEM et al.: "Single-mode fiber wave-lenght multiplexer", pages 4050-4052 IEEE TRANSACTIONS ON COMMUNICATIONS vol. COM-26, no. 7, juillet 1978 New York US MIKI et al.: "Viabilities of the wave-lenght-division-multiplexing transmission system over an optical fiber cable", pages 1082-1087**

(73) Titulaire: **LIGNES TELEGRAPHIQUES ET TELEPHONIQUES L.T.T., 1, rue Charles Bourseul, F-78702 Conflans-Ste-Honorine (FR)**

(72) Inventeur: **Eve, Michel, THOMSON-CSF SCPI 173, bld Haussmann, F-75360 Paris Cedex 08 (FR)**
Inventeur: **Floch, Bernard, THOMSON-CSF SCPI 173, bld Haussmann, F-75360 Paris Cedex 08 (FR)**

(74) Mandataire: **Benoit, Monique et al, THOMSON-CSF SCPI 173, Bld Haussmann, F-75379 Paris Cedex 08 (FR)**

Dispositif de séparation de deux signaux lumineux émis par des sources de longueurs d'onde différentes, et transmis sur une même fibre optique, et récepteur comportant un tel dispositif

La présente invention se rapporte d'une manière générale aux systèmes de transmission sur fibre optique et concerne plus particulièrement un dispositif de séparation de deux signaux lumineux de longueurs d'onde différentes transmis sur une même fibre optique.

Pour démultiplexer simultanément deux longueurs d'onde différentes, pour un système de transmission sur fibre optique, il est connu d'avoir recours à une séparation spatiale de ces longueurs d'onde en faisant appel à des dispositifs optiques complexes comprenant par exemple des filtres à couches minces diélectriques, des réseaux de diffraction ou des prismes dispersifs. Ces dispositifs sont toutefois volumineux et fragiles.

A la place de tels dispositifs optiques, il est connu d'utiliser une photodiode dont la structure permet de détecter et de démultiplexer simultanément deux longueurs d'onde, comme cela est décrit dans l'article publié dans la revue »Applied Physics Letters«, volume 34, n° 6, 15 mars 1979, page 401, intitulé: »Dual-wavelength demultiplexing InGaAsP photodiode«. Selon cet article, la photodiode est constituée d'un substrat sur lequel on a fait croître par épitaxie une succession de couches. Deux de ces couches sont dopées de manière à former deux photodiodes. Cependant, du point de vue technologique, il est très difficile de réaliser une croissance cristalline parfaitement homogène des différentes couches; en outre, une parfaite séparation des réponses spectrales des deux couches formant photodiodes est difficile à obtenir.

Comme autre système de démultiplexage, il est connu d'utiliser une fibre optique transmettant deux longueurs d'onde distinctes et se terminant par deux parties de fibre en dérivation dont l'une comporte une surlongueur prédéterminée, de telle sorte que le démultiplexage est obtenu par différence des déphasages des signaux lumineux transmis sur les deux parties de fibre de longueurs différentes, comme cela est décrit dans l'article publié dans la revue »Journal of Applied Physics«, volume 51, n° 8, août 1980, pages 4050 à 4052, intitulé: »Single-mode fiber wavelength multiplexer«. Toutefois, un tel système de séparation est de mise en œuvre relativement difficile.

La présente invention a pour but de remédier à ces inconvénients en proposant un dispositif de séparation ou de démultiplexage de deux signaux lumineux émis simultanément par deux sources de longueurs d'onde différentes, et transmis sur une même fibre optique, qui est particulièrement satisfaisant, d'une structure simple à base d'appareils électroniques classiques, et est peu coûteux. Ce dispositif est conçu de manière à effectuer une séparation temporelle des deux longueurs d'one, et le principe de cette séparation temporelle est fondé sur une propriété connue inhérente aux fibres optiques: en effet, une fibre optique ne possède pas les mêmes caractéristiques de transmission à deux longueurs d'onde différentes, et en particulier les temps de propagation, dans la fibre, des signaux lumineux émis simultanément par plusieurs sources peuvent varier considérablement d'une longueur d'onde à une autre.

A cet effet, l'invention a pour objet un dispositif de séparation de deux signaux lumineux émis par deux sources de longueurs d'onde différentes, chaque source lumineuse étant modulée par un signal périodique, ces signaux lumineux de longueurs d'onde différentes étant transmis sur une même fibre optique avec des premiers temps de propagation différents, et la fibre optique se terminant par une première et une seconde parties de fibre en dérivation dans chacune desquelles est dérivée une partie des signaux lumineux transmis, la première partie de fibre en dérivation comportant un prolongement prédéterminé dans lequel sont transmis les signaux lumineux dérivés avec des seconds temps de propagation différents, caractérisé en ce que le dispositif comporte:

— un premier et un second photodétecteurs disposés en regard du prolangement de la première partie de fibre en dérivation, et de la seconde partie de fibre en dérivation, respectivement, le premier photodétecteur détectant une partie des signaux périodiques de modulation, comportant des retards respectifs correspondant à la somme des premiers et seconds temps de propagation, et le second photodétecteur détectant l'autre partie des signaux périodiques de modulation, comportant des retards respectifs correspondant aux premiers temps de propagation;

— des premiers moyens à retard reliés au second photodétecteur et introduisant un retard égal à l'un des seconds temps de propagation;

— des premiers moyens de différenciation entre les signaux périodiques retardés engendrés par les premiers moyens à retard et les signaux périodiques retardés détectés par le premier photodétecteur, ces moyens de différenciation fournissant un signal périodique retardé correspondant à un codage de l'un des signaux périodiques modulant l'une des deux sources lumineuses de longueurs d'onde différentes; et

— un circuit électronique de traitement des signaux périodiques retardés comportant des moyens de détection de l'autre signal périodique modulant l'autre source lumineuse, connectés entre la sortie des premiers moyens de différenciation et l'une des entrées des premiers moyens de différenciation ou l'entrée des premiers moyens à retard.

On comprend qu'ainsi le prolongement prédéterminé de l'une des parties de fibre en dérivation

0 048 640

introduira des temps de propagation différents pour les signaux lumineux dérivés, ce qui permettra, en jouant sur la valeur du retard introduit par les moyens à retard, d'effectuer la séparation temporelle des deux signaux lumineux de longueurs d'onde différentes.

L'invention vise également un récepteur d'un système de transmission sur fibre optique comportant un tel dispositif de séparation de deux longueurs d'onde différentes.

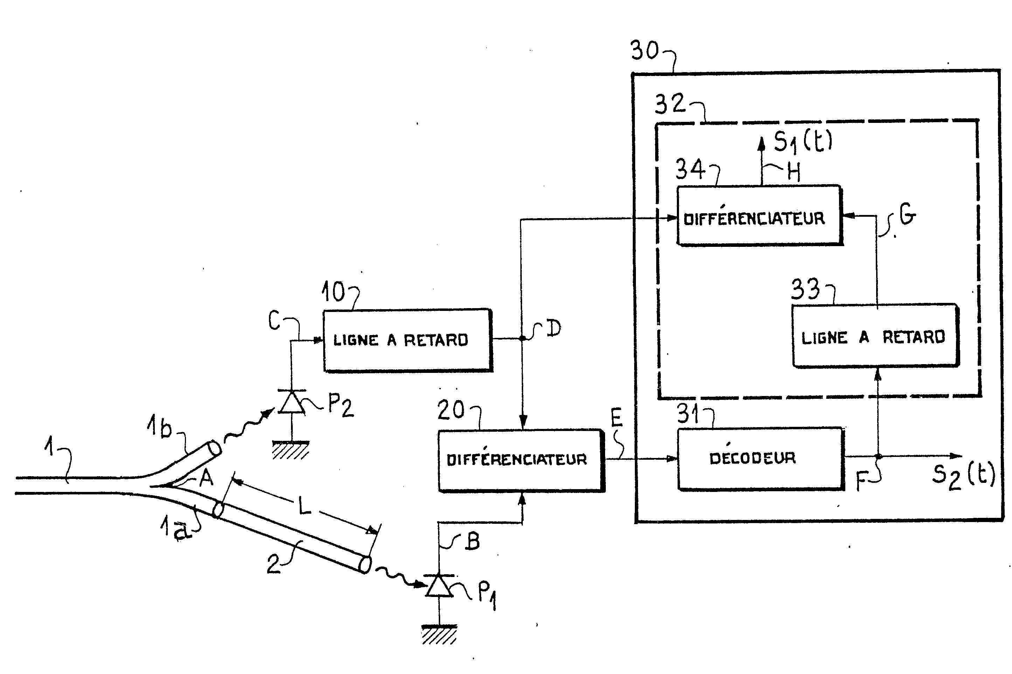

D'autres caractéristiques et avantages de l'invention apparaîtront mieux dans la description détaillée qui suit et se réfère à l'unique dessin annexé, donné uniquement à titre d'exemple et qui est un schéma partiellement sous forme de blocs du dispositif de séparation selon l'invention.

Suivant un exemple de réalisation, et en se reportant au dessin annexé, on a représenté en 1 le coeur d'une fibre optique monomode ou multimode.

Dans le but d'augmenter la capacité de la transmission sur fibre optique, il est d'usage d'utiliser plusieurs sources, telles que par exemple des diodes laser, qui émettent simultanément des signaux lumineux de longueurs d'onde, c'est-à-dire de couleurs, distinctes. Les deux longueurs d'onde habituellement utilisées dans la transmission sur fibre optique sont égales à 0,85 μm et 1,3 μm.

De plus, chaque diode laser est modulée par un signal périodique, tel que par exemple un signal numérique, représentant les informations destinées à être transmises sur la fibre optique 1.

A titre d'exemple, supposons qu'une première diode laser de longueur d'onde $\lambda_1$ (0,85 μm) est modulée par un premier signal numérique $S_1(t)$ de la forme:

$$S_1(t) = \sum_{-\infty}^{+\infty} a_n(t-nT)$$

avec $a_n = 0$ ou 1, et avec T la période de ce signal; et qu'une seconde diode laser de longueur d'onde $\lambda_2$ (1,3 μm) est modulée par un second signal numérique $S_2(t)$, de même période T, de la forme:

$$S_2(t) = \sum_{-\infty}^{+\infty} b_n(t-nT)$$

avec $b_n = 0$ ou 1.

On notera que la période du signal $S_2(t)$ peut également être un multiple de la période T du signal $S_1(t)$, sans sortir du cadre de l'invention.

Selon la propriété connue liée aux fibres optiques, mentionnée précédemment, les deux signaux lumineux émis simultanément par les deux diodes laser de longueurs d'onde $\lambda_1$ et $\lambda_2$, et modulées respectivement par les deux signaux numériques $S_1(t)$ et $S_2(t)$, se propagent dans la fibre optique 1 avec des temps de transit ou de propagation différents; ainsi, le signal lumineux de longueur d'onde $\lambda_1$ se propage dans la fibre pendant un temps $T_1$, tandis que le signal lumineux de la longueur d'onde $\lambda_2$ se propage pendant un temps $T_2$ différent de $T_1$. A titre illustratif, pour les deux longueurs d'onde égales à 0,85 μm et 1,3 μm, la différence des temps de propagation $(T_1-T_2)$ est de l'ordre de 50 ns par kilomètre.

Dans ces conditions, et en reprenant l'exemple indiqué précédemment, on détecterait à l'extrémité A de la fibre 1 un signal numérique $S_A(t)$ de la forme:

$$S_A(t) = S_1(t-T_1) + S_2(t-T_2)$$

soit

$$S_A(t) = \sum_{-\infty}^{+\infty} a_n(t-nT-T_1) + \sum_{-\infty}^{+\infty} b_n(t-nT-T_2)$$

Comme il apparaît sur la figure, l'extrémité A de la fibre 1 se termine par deux parties de fibre (1a, 1b) en dérivation dans chacune desquelles est dérivée, par exemple de façon égale, la puissance optique transmise dans la fibre 1. La réalisation des deux parties en dérivation 1a et 1b peut être effectuée par tout procédé connu de l'homme du métier.

Sur l'extrémité de la partie de fibre en dérivation 1a, est rapportée, c'est-à-dire connectée, par exemple par épissurage, une fibre optique secondaire 2 de longueur prédéterminée L. Cette fibre 2 peut également faire partie intégrante de la fibre principale 1, constituant ainsi un prolongement de la partie de fibre 1a. Dans ces conditions, suivant la même propriété connue indiquée précédemment, les deux signaux lumineux dérivés dans la partie 1a sont transmis dans la fibre 2 avec des temps de propagation différents; ainsi, le signal lumineux de longueur d'onde $\lambda_1$ se propage dans la fibre 2 pendant un temps $\tau_1$, tandis que le signal lumineux de longueur d'onde $\lambda_2$ se propage pendant un temps $\tau_2$ différent de $\tau_1$.

Comme on le voit sur la figure, deux photodétecteurs $P_1$ et $P_2$, tels que par exemple des photodiodes à avalanche, sont respectivement disposés en regard de la fibre optique 2 et de la partie de fibre en dérivation 1b. Ainsi, la photodiode $P_1$ détecte une partie des signaux périodiques de modulation,

3

comportant des retards respectifs correspondant à la somme des premiers ($T_1$; $T_2$) et seconds ($\tau_1$; $\tau_2$) temps de propagation, tandis que la seconde photodiode $P_2$ détecte l'autre partie des signaux périodiques de modulation, comportant des retards respectifs correspondant aux premiers temps de propagation ($T_1$; $T_2$). Dans l'exemple choisi, la photodiode $P_1$ engendre à sa sortie B un signal de la forme:

$$S_B(t) = \frac{1}{2} \left[ S_1(t - T_1 - \tau_1) + S_2(t - T_2 - \tau_2) \right]$$

soit

$$S_B(t) = \frac{1}{2} \left[ \sum_{-\infty}^{+\infty} a_n(t - nT - T_1 - \tau_1) + \sum_{-\infty}^{+\infty} b_n(t - nT - T_2 - \tau_2) \right]$$

et la photodiode $P_2$ engendre à sa sortie C un signal de la forme:

$$S_C(t) = \frac{1}{2} S_A(t)$$

c'est-à-dire:

$$S_C(t) = \frac{1}{2} \left[ S_1(t - T_1) + S_2(t - T_2) \right]$$

soit:

$$S_C(t) = \frac{1}{2} \left[ \sum_{-\infty}^{+\infty} a_n(t - nT - T_1) + \sum_{-\infty}^{+\infty} b_n(t - nT - T_2) \right]$$

Le dispositif de séparation selon l'invention comporte de plus des moyens à retard 10, constitués par exemple par un câble coaxial, reliés à la sortie C du photodétecteur $P_2$. La valeur du retard introduit par ces moyens est réglée de façon à être égale à l'un des temps de propagation ($\tau_1$; $\tau_2$) introduits par la fibre optique 2. Si on choisit ce retard égal à $\tau_1$ dans l'exemple choisi, le signal obtenu à la sortie D des moyens à retard 10 est de la forme:

$$S_D(t) = S_C(t - \tau_1)$$

soit:

$$S_D(t) = \frac{1}{2} \left[ S_1(t - T_1 - \tau_1) + S_2(t - T_2 - \tau_1) \right]$$

c'est-à-dire:

$$S_D(t) = \frac{1}{2} \left[ \sum_{-\infty}^{+\infty} a_n(t - nT - T_1 - \tau_1) + \sum_{-\infty}^{+\infty} b_n(t - nT - T_2 - \tau_1) \right]$$

La sortie B du photodétecteur $P_1$ et la sortie D des moyens à retard 10 sont connectées à un différenciateur 20 de structure classique. Ce différenciateur 20 effectue donc la différence entre le signal engendré par les moyens à retard 10 et celui détecté par la photodiode $P_1$; ainsi, dans l'exemple choisi, le différenciateur 20 fournit à sa sortie E un signal périodique de la forme:

$$S_E(t) = S_D(t) - S_B(t)$$

soit:

$$S_E(t) = \frac{1}{2} \left[ S_2(t - T_2 - \tau_1) - S_2(t - T_2 - \tau_2) \right]$$

c'est-à-dire:

$$S_E(t) = \frac{1}{2} \left[ \sum_{-\infty}^{+\infty} b_n(t - nT - T_2 - \tau_1) - \sum_{-\infty}^{+\infty} b_n(t - nT - T_2 - \tau_2) \right]$$

Ce signal résultant $S_E(t)$ fait donc intervenir uniquement le signal périodique modulant la diode laser à la longueur d'onde $\lambda_2$.

Si la longueur L de la fibre optique 2 est choisie de telle manière que la différence des temps de propagation ($\tau_1 - \tau_2$) est égale à la période (T) des signaux de modulation, c'est-à-dire $\tau_1 - \tau_2 = T$, le signal $S_E(t)$ devient:

4

$$S_E(t) = \frac{1}{2}\left[\sum_{-\infty}^{+\infty} b_n(t-nT-T_2-T-\tau_2) - \sum_{-\infty}^{+\infty} b_n(t-nT-T_2-\tau_2)\right]$$

soit

$$S_E(t) = \frac{1}{2}\left[\sum_{-\infty}^{+\infty} b_{n+1}(t-(n+1)T-T_2-\tau_2) - \sum_{-\infty}^{+\infty} b_n(t-nT-T_2-\tau_2)\right] \qquad (1)$$

Ce signal $S_E(t)$ correspond donc à un codage du signal périodique $S_2(t)$ modulant la diode laser de longueur d'onde $\lambda_2$.

A titre illustratif, pour deux signaux codés à 140 Mbt/s ($T = 6$ ns) et transmis aux deux longueurs d'onde $\lambda_1 = 0,85\ \mu$m et $\lambda_2 = 1,3\ \mu$m, la longueur L de la fibre optique 2 sera choisie égale à:

$$\frac{1000 \times 6}{50} = 120\ \text{m}.$$

La sortie E du différenciateur 20 est connectée à un circuit électronique de traitement 30 comportant des moyens de décodage 31 de structure classique, connectés à la sortie E du différenciateur 20. Ces moyens 31 effectuent le décodage du signal périodique $S_E(t)$ donné par l'équation (1), engendrant à sa sortie F le signal de modulation $S_2(t)$ modulant la diode laser de longueur d'onde $\lambda_2$, et par conséquent la suite des amplitudes $b_n$ des informations transmises à la longueur d'onde $\lambda_2$.

Le circuit de traitement 30 comporte également des moyens de détection 32 de l'autre signal périodique ($S_1(t)$ dans l'exemple choisi) modulant la diode laser à la longueur d'onde $\lambda_1$, connectés entre la sortie F des moyens de décodage 31 et la sortie D des moyens à retard 10. Plus précisément, les moyens de détection 32 comprennent une ligne à retard 33, telle que par exemple un câble coaxial, dont la valeur du terard est égale à $T_2 + \tau_1$, de sorte que le signal à sa sortie G, dans l'exemple choisi, est de la forme:

$$S_G(t) = S_F[t-(T_2+\tau_1)]$$

soit

$$S_G(t) = S_2(t-T_2-\tau_1)$$

Les moyens de détection 32 comportent également un différenciateur 34 connecté entre la sortie G de la ligne à retard 33 at la sortie D de la ligne à retard 10. Ce différenciateur 34 effectue donc la différence des signaux engendrés par chaque ligne à retard 10 et 33, de sorte que le différenciateur 34 fournit à sa sortie H, après mise en forme, le signal périodique $S_1(t)$ modulant la diode laser à la longueur d'onde $\lambda_1$. En effet, dans l'exemple choisi, le signal en sortie H est de la forme:

$$S_H(t) = S_D(t) - S_G(t)$$

soit

$$S_H(t) = \frac{1}{2} S_1(t-T_1-\tau_1)$$

Par conséquent, on obtient la suite des amplitudes $a_n$ des informations transmises à la longueur d'onde $\lambda_1$.

On notera que l'entrée D du différenciateur 34 peut être également connectée soir à l'entrée C de la ligne à retard 10, soit à l'entrée B du différenciateur 20, sans sortir du cadre de l'invention. Dans ces conditions, la valeur du retard introduit par la ligne à retard 33 sera choisie de manière que la différence effectuée par le différenciateur 34 ne fasse plus apparaître le signal périodique $S_2(t)$.

On a donc réalisé suivant l'invention un dispositif de séparation temporelle de deux longueurs d'onde, particulièrement simple, très efficace, et avantageux du point de vue coût de farbrication.

## Revendications

1. Dispositif de séparation de deux signaux lumineux émis par deux sources de longueurs d'onde différentes ($\lambda_1$, $\lambda_2$), chaque source lumineuse étant modulée par un signal périodique, ces signaux lumineux de longueurs d'onde différentes étant transmis sur une même fibre optique (1) avec des premiers temps de propagation différents ($T_1$, $T_2$), et la fibre optique se terminant par une première (1a) et une seconde (1b) parties de fibre en dérivation dans chacune desquelles est dérivée une partie des signaux lumineux transmis, la première partie (1a) de fibre en dérivation comportant un prolongement prédéterminé (2) dans lequel sont transmis les signaux lumineux dérivés avec des seconds temps de propagation différents ($\tau_1$, $\tau_2$), caractérisé en ce que le dispositif comporte:

— un premier ($P_1$) et un second ($P_2$) photodétecteurs disposés en regard du prolongement (2) de la première partie de fibre en dérivation (1a), et de la seconde partie de fibre en dérivation (1b), respectivement, le premier photodétecteur ($P_1$) détectant une partie des signaux périodiques de modulation, comportant des retards respectifs correspondant à la somme des premiers ($T_1$, $T_2$) et seconds ($\tau_1$, $\tau_2$) temps de propagation, et le second photodétecteur ($P_2$) détectant l'autre partie des signaux périodiques de modulation, comportant des retards respectifs correspondant aux premiers temps de propagation ($T_1$, $T_2$);

— des premiers moyens à retard (10) reliés au second photodétecteur ($P_2$) et introduisant un retard égal à l'un des seconds temps de propagation ($\tau_1$, $\tau_2$);

— des premiers moyens de différenciation (20) entre les signaux périodiques retardés engendrés par les premiers moyens à retard (10) et les signaux périodiques retardés détectés par le premier photodétecteur ($P_1$), ces moyens de différenciation (20) fournissant un signal périodique retardé correspondant à un codage de l'un des signaux périodiques modulant l'une des deux sources lumineuses de longueurs d'onde différentes ($\lambda_1$, $\lambda_2$); et

— un circuit électronique de traitement (30) des signaux périodiques retardés comportant des moyens de détection (32) de l'autre signal périodique modulant l'autre source lumineuse, connectés entre la sortie (E) des premiers moyens de différenciation (20) et l'une des entrées (B, D) des premiers moyens de différenciation (20) ou l'entrée (C) des premiers moyens à retard (10).

2. Dispositif selon la revendication 1, caractérisé en ce que le circuit de traitement (30) comporte de plus des moyens de décodage (31) du signal périodique engendré par les premiers moyens de différenciation (20), connectés entre la sortie (E) des premiers moyens de différenciation et l'entrée (F) des moyens de détection (32), ces moyens de décodage fournissant l'un des deux signaux périodiques modulant l'une des sources lumineuses de longueurs d'onde différentes ($\lambda_1$, $\lambda_2$).

3. Dispositif selon la revendication 2, caractérisé en ce que les moyens de détection (32) comportent:

— des seconds moyens à retard (33) connectés à la sortie des moyens de décodage (31), introduisant ainsi un retard pour l'un des signaux périodiques de modulation engendré par les moyens de décodage; et

— des seconds moyens de différenciation (34) connectés entre la sortie (G) des seconds moyens à retard (33) et l'entrée (D) des premiers moyens de différenciation (20) reliée aux premiers moyens à retard (10), ces seconds moyens de différenciation fournissant l'autre signal périodique de modulation.

4. Dispositif selon l'une quelconque des revendications 1 à 3, caractérisé en ce que les deux signaux périodiques de modulation ont la même période (T).

5. Dispositif selon la revendication 4, caractérisé en ce que le prolongement (2) de la première partie de fibre en dérivation (1a) est dimensionné de telle sorte que la différence des seconds temps de propagation ($\tau_1$, $\tau_2$) est égale à la période (T) des signaux de modulation.

6. Dispositif selon l'une quelconque des revendications précédentes, caractérisé en ce que le prolongement (2) de la première partie de fibre en dérivation (1a) est constitué par une fibre optique rapportée sur la première partie de fibre en dérivation (1a).

7. Dispositif selon l'une quelconque des revendications précédentes, caractérisé en ce que les signaux périodiques de modulation sont des signaux numériques.

8. Dispositif selon l'une quelconque des revendications précédentes, caractérisé en ce que le premier ($P_1$) et le second ($P_2$) photodétecteurs sont des photodiodes à avalanche.

9. Récepteur d'un système de transmission, caractérisé en ce qu'il comporte un dispositif de séparation selon l'une quelconque des revendications précédentes.

**Patentansprüche**

1. Vorrichtung zum Trennen zweier Lichtsignale, die von zwei je mit einem periodischen Signal modulierten Quellen verschiedener Wellenlängen ($\lambda_1$, $\lambda_2$) ausgestrahlt und auf einer gemeinsamen Lichtleitfaser mit unterschiedlichen ersten Fortpflanzungszeiten ($T_1$, $T_2$) übertragen werden, wobei die Lichtleitfaser am Ende einen ersten (1a) und einen zweiten Faserabschnitt (1b) in Ableitung aufweist, die je einen Teil der übertragenen Lichtsignale in Ableitung empfangen, und wobei der erste Faserabschnitt (1a) in Ableitung eine vorgegebene Verlängerung (2) aufweist, in der die abgeleiteten Lichtsignale gemäß unterschiedlicher zweiter Forpflanzungszeiten ($\tau_1$, $\tau_2$) übertragen werden, dadurch gekennzeichnet, daß die Vorrichtung aufweist:

— einen ersten ($P_1$) und einen zweiten Lichtdetektor ($P_2$), die vor dem Ende der Verlängerung (2) des ersten Faserabschnitts in Ableitung (1a) bzw. vor dem Ende des zweiten Faserabschnitts in Ableitung (1b) liegen, wobei der erste Lichtdetektor ($P_1$) einen Teil der periodischen Modulationssignale empfängt, die gemäß der Summe der ersten ($T_1$, $T_2$) und zweiten

Fortpflanzungszeiten ($\tau_1$, $\tau_2$) verzögert sind, wogegen der zweite Lichtdetektor (P$_2$) den anderen Teil der periodischen Modulationssignale empfängt, die gemäß den ersten Fortpflanzungszeiten (T$_1$, T$_2$) verzögert sind;

— erste Verzögerungsmittel (10), die an den zweiten Lichtdetektor (P$_2$) angeschlossen sind und eine Verzögerung gleich einer der zweiten Fortpflanzungszeiten ($\tau_1$, $\tau_2$) einführen;

— erste Differenziermittel (20) zwischen den periodischen verzögerten Signalen, die an den ersten Verzögerungsmitteln (10) verfügbar sind, und den verzögerten periodischen Signalen, die vom ersten Lichtdetektor (P$_1$) erzeugt werden, wobei diese Differenziermittel (20) ein periodisches verzögertes Signal erzeugen, das einer Kodierung eines der periodischen Signale entspricht, das eine der beiden Lichtquellen unterschiedlicher Wellenlänge ($\lambda_1$, $\lambda_2$) moduliert; und

— einen elektronischen Verarbeitungsschaltkreis (30) für die verzögerten periodischen Signale, der Detektormittel (32) für das andere periodische Signal enthält, welches die andere Lichtquelle moduliert, wobei die Detektormittel zwischen dem Ausgang (E) der ersten Differenziermittel (20) und einem der Eingänge (B, D) der ersten Differenziermittel (20) oder dem Eingang (C) der ersten Verzögerungsmittel (10) eingefügt sind.

2. Vorrichtung nach Anspruch 1, dadurch gekennzeichnet, daß der Verarbeitungsschaltkreis (30) außerdem Dekodiermittel (31) für das von den ersten Differenziermitteln (20) erzeugte periodische Signal aufweist, die zwischen dem Ausgang (E) der ersten Differenziermittel und dem Eingang (F) der Detektormittel (32) eingefügt sind und die eines der beiden periodischen Signale liefern, das eine der Lichtquellen unterschiedlicher Wellenlängen ($\lambda_1$, $\lambda_2$) moduliert.

3. Vorrichtung nach Anspruch 2, dadurch gekennzeichnet, daß die Detektormittel (32)

— zweite Verzögerungsmittel (33), die an den Ausgang der Dekodiermittel (31) angeschlossen sind und somit eines der periodischen Modulationssignale, das von den Dekodiermitteln erzeugt wird, verzögern, und

— zweite Differenziermittel (34) aufweisen, die zwischen dem Ausgang (G) der zweiten Verzögerungsmittel (33) und dem Eingang (D) der ersten Differenziermittel (20), der auch an die ersten Verzögerungsmittel (10) angeschlossen ist, eingefügt sind, wobei diese zweiten Differenziermittel das andere periodische Modulationssignal liefern.

4. Vorrichtung nach einem beliebigen der Ansprüche 1 bis 3, dadurch gekennzeichnet, daß die beiden periodischen Modulationssignale dieselbe Periode (T) besitzen.

5. Vorrichtung nach Anspruch 4, dadurch gekennzeichnet, daß die Verlängerung (2) des zweiten Faserabschnitts in Ableitung (1a) so bemessen ist, daß die Differenz der zweiten Fortpflanzungszeiten ($\tau_1$, $\tau_2$) gleich der Periode (T) der Modulationssignale ist.

6. Vorrichtung nach einem beliebigen der vorhergehenden Ansprüche, dadurch gekennzeichnet, daß die Verlängerung (2) des ersten Faserabschnitts in Ableitung (1a) aus einer Lichtleitfaser besteht, die an den ersten Faserabschnitt in Ableitung (1a) anschließt.

7. Vorrichtung nach einem beliebigen der vorhergehenden Ansprüche, dadurch gekennzeichnet, daß die periodischen Modulationssignale digitale Signale sind.

8. Vorrichtung nach einem beliebigen der vorhergehenden Ansprüche, dadurch gekennzeichnet, daß der erste Lichtdetektor (P$_1$) und der zweite Lichtdetektor (P$_2$) Photodioden vom Avalanche-Typ sind.

9. Empfänger für ein Übertragungssystem, dadurch gekennzeichnet, daß er eine Trennvorrichtung nach einem beliebigen der vorhergehenden Ansprüche enthält.


## Claims

1. A device for separating two light signals emitted by two sources having different wave-lengths ($\lambda_1$, $\lambda_2$), each light source being modulated by a periodic signal, said light signals of different wave-lengths being transmitted on a unique optical fibre (1) with first propagation times of different values (T$_1$, T$_2$) and the optical fibre being terminated by a first branched-off portion (1a) of fibre and by a second branched-off portion (1b) of fibre, a part of the light signals transmitted being shunted to each portion, the first branched-off portion (1a) being provided with a predetermined extension (2) in which the shunted light signals are transmitted with second propagation times of different value ($\tau_1$, $\tau_2$), characterized in that the device comprises:

— a first photodetector (P$_1$) and a second photodetector (P$_2$) which are placed respectively opposite to the extension (2) of the first branched-off portion (1a) of fibre and opposite to the second branched-off portion (1b) of fibre, the first photodetector (P$_1$) detecting part of the periodic modulation signals having respective time delays corresponding to the sum of the first and second propagation times (T$_1$, T$_2$; $\tau_1$, $\tau_2$) and said second photodetector (P$_2$) detecting the other part of the periodic modulation signals having respective delays corresponding to the first

7

propagation times $(T_1, T_2)$;

— first delay means (10) connected to the second photodetector $(P_2)$ and introducing a delay equal to one of the second propagation times $(\tau_1, \tau_2)$;

— first differentiation means (20) between the delayed periodic signals generated by the first delay means (10) and the delayed periodic signals detected by the first photodetector $(P_1)$, said differentiation means (20) delivering a delayed periodic signal corresponding to a coding of one of the periodic signals which modulates one of the two light sources of different wave lengths $(\lambda_1, \lambda_2)$; and

— an electronic circuit (30) for processing the delayed periodic signals, comprising means (32) for detecting the other periodic signal which modulates the other light source, these means being connected between the output (E) of the first differentiation means (20) and one of the inputs (B, D) of the first differentiation means (20) or the input (C) of the first delay means (10).

2. A device according to claim 1, characterized in that the processing circuit (30) further comprises means (31) for decoding the periodic signal generated by the first differentiation means (20), said decoding means being connected between the output (E) of the first differentiation means and the input (F) of the detection means (32) and furnishing one of the two periodic signals which modulates one of the light sources of different wave lengths $(\lambda_1, \lambda_2)$.

3. A device according to claim 2, characterized in that the detection means (32) comprise:

— second delay means (33) connected to the output of the decoding means (31) and thus introducing a delay to one of the periodic modulation signals which is generated by the decoding means; and

— second differentiation means (34) connected between the output (G) of the second delay means (33) and that input (D) of the first differentiation means (20) which is connected to the first delay means (10), the second differentiation means delivering the other periodic modulation signal.

4. A device according to any one of the claims 1 to 3, characterized in that the two periodic modulation signals have the same period (T).

5. A device according to claim 4, characterized in that the extension (2) of the first branched-off portion of fibre (1a) is so dimensioned that the difference between the second propagation times $(\tau_1, \tau_2)$ is equal to the period (T) of the modulation signal.

6. A device according to any one of the preceding claims, characterized in that the extension (2) of the first branched-off portion (1a) of fibre is constituted by an optical fibre which is added to the first branched-off portion (1a) of fibre.

7. A device according to any one of the preceding claims, characterized in that the periodic modulation signals are digital signals.

8. A device according to any one of the preceding claims, characterized in that the first photodetector $(P_1)$ and the second photodetector $(P_2)$ are avalanche-type photodiodes.

9. A receiver of a transmission system, characterized in that it comprises a separation device according to any one of the preceding claims.